# EUROPÄISCHE PATENTSCHRIFT

(11) **EP 3 166 871 B1**
(45) Veröffentlichungstag und Bekanntmachung des Hinweises auf die Patenterteilung: **14.08.2019**
(21) Anmeldenummer: 15728884.6
(22) Anmeldetag: 16.06.2015
(51) Int. Cl.: B65D 85/804, A47J 31/36

(54) **KAPSEL MIT EINEM VORZUGSWEISE ROTATIONSSYMMETRISCH AUSGEBILDETEN KAPSELKÖRPER**
CAPSULE WITH A PREFERABLY ROTATIONALLY SYMMETRICAL CAPSULE BODY
CAPSULE POURVUE D'UN CORPS, DE PRÉFÉRENCE À SYMÉTRIE DE RÉVOLUTION

(30) Priorität: 09.07.2014 CH 10452014; 11.02.2015 CH 1852015
(43) Veröffentlichungstag der Anmeldung: 17.05.2017
(73) Patentinhaber: Delica AG, 4127 Birsfelden (CH)
(72) Erfinder: GUGERLI, Raphael, CH-8904 Aesch (CH)
(74) Vertreter: Hepp Wenger Ryffel AG
(86) Internationale Anmeldenummer: PCT/EP2015/063477
(87) Internationale Veröffentlichungsnummer: WO 2016/005151

(56) Entgegenhaltungen:
- EP-A1- 1 864 917
- EP-A1- 2 210 826
- EP-A1- 2 236 437
- EP-A1- 2 487 122
- EP-A1- 2 662 315
- EP-A1- 2 662 316
- WO-A1-2008/132571
- WO-A1-2015/124534

## Beschreibung

Die vorliegende Erfindung betrifft eine Kapsel mit einem vorzugsweise rotationssymmetrisch ausgebildeten Kapselkörper zur Zubereitung eines flüssigen Lebensmittels nach dem Oberbegriff von Anspruch 1. Darüber hinaus betrifft die ein System umfassend eine Kapsel und eine Getränkezubereitungsmaschine, nach dem Oberbegriff der weiteren unabhängigen Patentansprüche.

Derartige Kapseln finden insbesondere für die Zubereitung von Kaffee oder kaffeeartigen Getränken verbreitet Anwendung. Die Kapsel bildet dabei eine Portionsverpackung für den Transport und die Lagerung einer darin enthaltenen Ausgangssubstanz zur Herstellung eines fertigen Getränkeproduktes. So sind Kapseln mit gemahlenem Kaffeepulver zur Herstellung von Kaffeegetränken weit verbreitet. Des Weiteren sind Kapseln, welche Trockenmilchpulver zur Herstellung von Milchschaum enthalten bekannt. Eine zentrale Rolle bei der Zubereitung eines fertigen Getränkeproduktes in einer entsprechenden Getränkezubereitungsmaschine spielt die Ausgestaltung der Kapsel. Derartige Maschinen arbeiten in der Regel mit einem hohen Betriebsdruck, wobei je nach Zubereitungsart und Ausgangssubstanz das Strömungsverhalten der Flüssigkeit in der Kapsel eine bedeutende Rolle spielt. Eine besondere Bedeutung kommt dabei der Bildung von Schaum im Zuge der Zubereitung mindestens teilweise aufgeschäumten Getränkeprodukten zu.

In diesem Zusammenhang ist es grundsätzlich bereits bekannt am Boden der Kapsel ein Strömungselement anzuordnen um das Strömungsverhalten der die Kapsel durchfliessenden Flüssigkeit zu beeinflussen. Stand der Technik zu dieser Thematik sind: EP 1 864 917, EP 2 210 826, WO 2008 132571, EP 2 662 316, EP 2 662 315, EP 2 236 437, EP 2 487 122.

So zeigt die EP 1 440 903 A1 eine Kapsel, in deren Innenraum ein Strömungselement angeordnet ist. Das besagte Strömungselement bildet gemeinsam mit dem Kapselkörper eine Düse zur Erzeugung eines Getränkestrahls, wodurch die Eigenschaften des zubereiteten Getränkeprodukts beeinflussbar sind. So ist es zum Beispiel möglich, Luft in den Getränkestrahl einzubringen, wodurch eine Vielzahl kleiner Luftblasen im Getränkeprodukt fein dispergiert wird.

Ferner beschreibt die EP 2 343 247 B1 eine Kapsel als Portionspackung zur Herstellung eines Getränkes aus einem löslichen Pulver. Das besagte Pulver befindet sich in einem durch zwei Trennwände abgetrennten Kompartiment innerhalb der Kapsel. Die auslaufseitige Trennwand ist am Boden angebracht und derart ausgestaltet, dass sie während des Lösungsprozesses ein Durchmischen einer die Kapsel durchfliessenden Flüssigkeit begünstigt.

Die EP 1 864 917 A1 beschreibt eine Kapsel mit einer eingesetzten Platte im Bodenbereich, welche in Zusammenwirkung mit der Kapselhülle eine Ventilwirkung entfaltet. Hierzu ist der Rand der Platte flexibel ausgestaltet. Am Rand der Platte wird durch diese Ventilwirkung eine Strömung ausgebildet.

Ein Nachteil dieser Konstruktionen besteht darin, dass sowohl der Kapselkörper als auch das Strömungselement, bzw. die auslaufseitige Trennwand, sehr präzise gefertigt sein müssen, um sowohl einen festen Sitz im Kapselinnern als auch eine Verwirbelung der die Kapsel durchfliessenden Flüssigkeit zu gewährleisten. Ein weiterer Nachteil besteht darin, dass bei den besagten Kapseln der über sie erzielbare Druckgradient limitiert ist.

Es ist daher die Aufgabe der Erfindung, die Nachteile im Stand der Technik zu überwinden. Insbesondere soll eine Kapsel der eingangs genannten Art geschaffen werden, bei welcher der Kapselkörper und das Strömungselement mit geringeren Fertigungstoleranzen kostengünstig gefertigt werden können. Bei der Herstellung eines Getränkeproduktes soll eine gute Durchmischung, bzw. ein Aufschäumen, desselben jedoch gewährleistet sein.

Diese Aufgaben werden durch eine Kapsel mit den in Anspruch 1 aufgeführten Merkmalen gelöst. Die Erfindung betrifft damit eine Kapsel umfassend einen vorzugsweise rotationssymmetrisch ausgebildeten Kapselkörper mit mindestens einer Seitenwand und einem Boden. Ferner weist die Kapsel einen den Kapselkörper abdeckenden Deckel zur Bildung von wenigstens einer Kammer auf, welche mindestens eine Substanz zur Zubereitung eines flüssigen Lebensmittels enthält. Zur Durchleitung einer Flüssigkeit durch die Kammer bilden der Deckel eine Eintrittsseite und der Boden eine Austrittsseite. Zudem ist über dem Boden ein Strömungselement über einen Haltebereich in der Kapsel gehalten. Vorzugsweise ist dieses Strömungselement von der die Kapsel durchfliessenden Flüssigkeit umströmbar. Insbesondere dient es der Erzeugung eines Getränkestrahls. Das Strömungselement unterteilt die Kammer dadurch in einen deckelseitigen Teil und einen bodenseitigen Teil. Des Weiteren ist ein Durchlass durch gegenüberliegende Abschnitte des Bodens und des Strömungselementes begrenzt. Der Haltebereich ist von der Flüssigkeit um- und/oder durchströmbar. Das Strömungselement kann dabei über den Haltebereich formschlüssig, kraftschlüssig, oder stoffschlüssig in der Kapsel gehalten werden.

Dadurch, dass der Haltebereich, über den das Strömungselement in der Kapsel gehalten ist, von der Flüssigkeit um- und/oder durchströmbar ist, wird es ermöglicht, die besagte Kapsel mit deutlich geringerem Fertigungstoleranzen herzustellen. Dennoch weist der Durchlass, welcher vorzugsweise zum Erzeugen eines Getränkestrahls dient, eine vorteilhafte Geometrie auf. Dies ermöglicht es zum einen, Luft in den Getränkestrahl einzubringen, wodurch eine Vielzahl kleiner Luftblasen im Getränkeprodukt fein dispergiert wird. Andererseits treten beim Durchfliessen des Durchlasses innerhalb der Flüssigkeit an den den Durchlass begrenzenden Abschnitten des Bodens und des Strömungselementes sogenannte Scherkräfte auf. Die Flussgeschwindigkeit ist dabei in der Regel ausreichend hoch, dass die Strömung im Bereich des Durchlasses turbulent wird. Dies begünstigt ein weiteres Aufschäumen des Getränkeproduktes.

Erfindungsgemäss ist der Durchlass durch wenigstens zwei je gegeneinander gerichtete, vorzugsweise kreisringförmige, Stege gebildet, wobei ein erster Steg Teil des Bodens und ein zweiter Steg Teil des Strömungselementes ist. Alternativ ist der Durchlass durch eine Fläche des Strömungselementes und durch einen vorzugsweise kreisringförmigen Steg am Boden gebildet. Dadurch ist es möglich, den Durchlass unabhängig von den Haltemitteln des Strömungselementes zu gestalten, wodurch die Charakteristik des Durchmischens und des Aufschäumens des Getränkeproduktes beliebig angepasst werden kann. Eine ähnliche Wirkung kann erzielt werden, wenn der Durchlass durch eine Fläche des Bodens und durch einen vorzugsweise kreisringförmigen Steg am Strömungselement gebildet ist. Ersichtlicherweise lässt sich mit all diesen Ausführungsformen ein Ringspalt bilden, der als Durchlass geeignet ist. Die sich gegenüberliegenden Flächen müssen dabei nicht zwingend parallel angeordnet sein.

Es ist auch denkbar, dass der Durchlass im Haltebereich liegt. Auf diese Weise dient der Haltebereich gleichzeitig zum Halten des Strömungselementes im Kapselinnern und zur Bildung des Durchlasses, was eine sehr einfache Kapselbauweise ermöglicht.

Des Weiteren kann das Strömungselement im Wesentlichen die Form einer Scheibe mit einem Rand haben. Dieser Rand kann teilweise vorzugsweise quer verlaufende Nuten aufweisen, welche ein Umströmen des Strömungselementes erlauben und/oder begünstigen. Zudem kann das Strömungselement mit zumindest einen Griffelement versehen sein. Dieses Griffelement kann beispielsweise zum Einsetzten des Strömungselementes in einen Kapselkörper dienen.

Ferner kann das Strömungselement derart ausgebildet sein, dass es unter Druckeinwirkung im deckelseitigen Teil der Kammer gegen den Boden pressbar ist. Dadurch kann verhindert werden, dass eine Breite oder ein Querschnitt des Durchlasses durch den Einfluss der unter Druck stehenden Flüssigkeit im deckelseitigen Teil der Kammer erhöht wird. Dies würde die Geometrie des Durchlasses nachteilig beeinflussen und in schlimmsten Fall ein Durmischen und/oder Aufschäumen des Getränkeproduktes im Wesentlichen verunmöglichen.

Ausserdem kann ein solches Strömungselement unter Einwirkung von Druck und/oder Wärme deformierbar und/oder verschiebbar sein. Dabei wird durch Deformation und/oder Verschiebung des Strömungselementes unter den Bedingungen, wie sie in einer Getränkeherstellungsvorrichtung der eingangs erwähnten Art vorherrschen, ein Anpassen des Strömungselementes an die Kapselgeometrie ermöglicht. Dies führt dazu, dass Ungenauigkeiten in der Fertigung von Boden und Strömungselement ausgeglichen werden.

Die Stege können zudem einen Anschlag zum Verhindern eines axialen Verschiebens des Strömungselementes in Richtung des Bodens bilden. Auf diese Weise wird vermieden, dass bei Einleiten von unter Druck stehender Flüssigkeit in die Kapsel das Strömungselement in Richtung Boden gedrückt wird, was zu einem Verstopfen der Kapsel führen kann. Zusätzlich können die Stege segmentweise unterschiedliche Höhen aufweisen, so dass selbst bei komplettem Durchdrücken des Strömungselementes auf den Steg des Bodens immer ein Durchlass für die Flüssigkeit offen bleibt. Die Fertigungstoleranzen zwischen Strömungselement und Kapselkörper können nochmals vereinfacht werden. Selbstverständlich kann auch der Steg am Boden segmentweise unterschiedliche Höhen aufweisen.

Ferner kann unter Druckeinwirkung im deckelseitigen Teil der Kammer auf das Strömungselement die Breite oder der Querschnitt des Durchlasses verkleinerbar sein. Dadurch wird ein Durchlass mit variablem Querschnitt geschaffen, welcher sich unter den Bedingungen, wie sie bei der Herstellung eines Getränkeproduktes in der Kammer vorherrschen, zusätzlich verkleinert um eine bessere Durchmischung- bzw. Aufschäumcharakteristik der Kammer zu erzielen.

Im Bereich des Durchlasses kann ein Ventil zum Öffnen und Verschliessen des Durchlasses angeordnet sein. Ein solches Ventil kann ein Austreten von Flüssigkeit aus der Kammer bei atmosphärischem Innendruck verhindern. Dies ermöglicht es, eine mit Flüssigkeit gefüllte Kapsel nach erfolgter Herstellung eines Getränkeproduktes aus der Getränkeherstellungsmaschine zu entfernen, ohne dass Flüssigkeit aus der Kapsel austritt.

Das Ventil kann unter Druckeinwirkung, insbesondere durch eine durch die Druckeinwirkung bedingte Verschiebung und/oder Deformation des Strömungselementes, öffnenbar sein. Ein solches Ventil stellt sicher, dass ein für die Zubereitung des Getränkes benötigter Innendruck gewährleistet wird, bevor das Getränk aus der Kapsel ausfliessen kann. Nach erfolgter Getränkezubereitung, wenn der Druck im Innern der Kapsel wieder reduziert ist, kann sich das Ventil wieder Verschliessen indem das Strömungselement sich wieder zurückbewegt.

Das Ventil kann eine Dichtlippe aufweisen, welche von einer korrespondierenden Dichtfläche abhebbar ist. Die Dichtlippe kann bei einer Verschiebung des Strömungselementes gegen den Boden mit wenigstens einer Rampe zum Öffnen derart zusammenwirken, dass die Dichtlippe von der Dichtfläche abgehoben wird. Eine Dichtlippe mit korrespondierender Dichtfläche stellt eine einfache und zuverlässige Dichtung zur Verfügung. Durch die Zusammenwirkung mit einer Rampe kann das Ventil zuverlässig und selbst bei einer geringen Verschiebung des Strömungselementes definiert geöffnet und geschlossen werden. Die Dichtlippe kann umlaufend oder lediglich in einem oder mehreren Segmenten ausgestaltet sein.

Dabei kann die Dichtlippe oder die Dichtfläche am Steg am Boden angeordnet sein. Die Dichtlippe kann beispielsweise mit einer Dichtfläche zusammenwirken, welche auf der Seitenwand des durchlassdefinierenden Steges angeordnet ist. Entsprechend kann auch die Rampe an dieser Seitenwand des Steges angeordnet sein. Somit wird die Geometrie des Durchlasses vom Ventil nicht beeinflusst. Vorzugsweise sind mehrere Rampen auf der Umfangsfläche des Steges verteilt. Dabei kann die Dichtfläche und entsprechend auch die wenigstens eine Rampe auf der inneren oder auf der äusseren Umfangsfläche oder Seitenwand des Steges angeordnet sein.

Ferner können im bodenseitigen Teil der Kammer vorzugsweise kreisringförmige Elemente zum Ablenken der aus dem Durchlass austretenden Flüssigkeit angeordnet sein. Durch eine zusätzliche Richtungsänderung der Flüssigkeit im bodenseitigen Teil der Kammer wird eine weitere Verwirbelung erzielt, woraus ein effizienteres Durchmischen bzw. Aufschäumen resultiert.

Der Boden kann im Haltebereich eine vorzugsweise kreisförmige Aufnahme, insbesondere eine Aufnahmeschulter, aufweisen. An dieser kann das Strömungselement lagestabil gehalten, insbesondere eingerastet, sein. Durch diese Anordnung ist ein modularer Aufbau der Kapsel möglich, wodurch eine Reihe von verschiedenen Strömungselementen in denselben Kapselkörper einsetzbar ist. Der Boden kann eine vorzugsweise zylindrische Vertiefung mit einer Seitenwand aufweisen, welche ganz oder teilweise die Aufnahme bildet. Dies stellt eine besonders vorteilhafte Ausführung des Bodenteils des Kapselkörpers dar. Ferner können an der Aufnahme und am Strömungselement korrespondierende Rastelemente angeordnet sein. Dies ermöglicht ein Einrasten des Strömungselementes in der Aufnahme am Boden des Kapselkörpers, wodurch eine sehr einfache Montage der Kapsel erzielt wird.

Der Haltebereich kann Öffnungen aufweisen, um ein Durchströmen des Haltebereichs zu ermöglichen und/oder zu begünstigen. Solche Öffnungen sind insbesondere bei einer Befestigung des Strömungselementes im Kapselkörper mittels Rastelementen hilfreich, da so die Rastverbindung im Wesentlichen dicht ausgestaltet werden kann und die Flüssigkeit trotzdem aus der deckelseitigen Kammer in die bodenseitige Kammer gelangen kann. Diese Öffnungen können beispielsweise ein umlaufendes Rastelement in einzelne Segmente Aufteilen. Vorzugsweise sind zwei, drei, vier oder mehrere Öffnungen vorgesehen, wobei die Dimensionen und die Anzahl der Öffnungen derart gewählt wird, dass ein gefordertes Durchströmen des Getränkes durch die Kapsel ermöglicht wird.

In einer weiteren vorteilhaften Ausführungsform kann der Boden einen Auslaufstutzen mit einer Auslauföffnung aufweisen. Dadurch ist eine besonders hygienische Herstellung eines Getränkeproduktes mit einer Getränkeherstellungsmaschine möglich, da das aus der Kapsel austretende Getränkeprodukt mit anderen Komponenten des Systems nicht in Berührung kommt.

Im Boden kann in Fliessrichtung vor dem Auslaufstutzen eine Schikane angeordnet sein, welche ein Mäandern oder zumindest eine Richtungsänderung der Fleissrichtung der Flüssigkeit vom Durchlass zum Auslaufstutzen erzwingt. Ausserdem kann eine solche Schikane auch ein gleichmässiges Ausfliessen aus dem Auslaufstutzen begünstigen. Die Schikane besteht beispielsweise aus mehreren umlaufend angeordneten kreissegmentförmigen Wandstücken, welche aus dem Boden des Kapselkörpers in einer Kronenförmigen Struktur aufragen. Ausserdem können auch mehrere solche Schikanen koaxial um den Auslaufstutzen angeordnet sein, wobei diese vorzugsweise gegeneinander versetzt sind, so dass sich die Fliessrichtung des Getränkes mehrmals ändern muss. Schikanen begünstigen ausserdem ein gleichmässiges Vermischen bzw. Aufschäumen des austretenden Getränkes.

Zwischen dem Durchlass und der Auslauföffnung kann eine insbesondere unter Druck zerreissbare oder penetrierbare Folie oder Membran angeordnet sein. Die Auslauföffnung wird dadurch derart verschlossen, dass eine Verwendung der Kapsel ohne vorheriges Öffnen der Auslauföffnung möglich ist. Der Auslauf beim Austreten des Getränkeproduktes aus der Kapsel durch den im Inneren aufgebauten Druck durch ein Bersten selbstständig geöffnet. Im Auslaufstutzen kann ein Prallelement, insbesondere eine Prallplatte, angeordnet sein. Das Vorhandensein einer solchen führt zu einer weiteren Verwirbelung des Getränkestrahls, was ein Vermischen bzw. ein Aufschäumen des Getränkeproduktes weiter begünstigt. Ebenso kann im Auslaufstutzen ein Leitelement angeordnet sein, welches das ausfliessende Getränk beruhigt und einen kompakten Strahl formt. Ein solches Leitelement kann durch einen Dorn gebildet werden, welcher mit seitlichen Flügeln an der Wand des Auslaufstutzens befestigt ist. Alternativ kann auch der Auslaufstutzen mit einem Deckelelement mit entsprechenden Auslassfenstern abgedeckt sein, so dass der Dorn an diesem Deckelelement befestigt ist.

Die Folie oder Membran kann in einem Abstand zum Boden des Kapselkörpers angeordnet sein. Vorzugsweise ist hierzu ein kreisförmiger Vorsprung vorgesehen, welcher konzentrisch zum Steg verläuft und auf welchem die Folie oder Membran befestigt, insbesondere aufgeschweisst oder aufgeklebt werden kann.

Zudem kann die mindestens eine Substanz zur Zubereitung eines flüssigen Lebensmittels in direktem Kontakt mit dem Strömungselement sein. Durch diese Ausführung ist zwischen dem deckelseitigen Teil der Kammer und dem Auslauf der Kapsel kein weiteres Filterelement für den Kapselinhalt nötig. Allerdings kann die mindestens eine Substanz zur Zubereitung eines flüssigen Lebensmittels auch durch ein Filterelement vom Strömungselement getrennt sein. Dies ist insbesondere zur Extraktion von sehr feinkörnigen Getränkezutaten wie Kaffeepulver vorteilhaft.

Der Kapselkörper und/oder das Strömungselement können aus einem Metall, vorzugsweise aus Aluminium, oder aus einem Polymer, vorzugweise aus Polypropylen, gebildet sein. Dieser Materialien zeichnen sich durch eine hohe Lebensmittelverträglichkeit und eine gute Bearbeitbarkeit aus. Ausserdem bieten sie die Möglichkeit, die Kapsel zu recyceln. Allerdings können der Kapselkörper und das Strömungselement auch aus einem biologisch abbaubaren Polymer gebildet sein. Dies ermöglicht eine sehr umweltschonende Entsorgung der Kapsel. Der Kapselkörper und das Strömungselement können ferner unter anderem durch Spritzguss hergestellt werden. Dieses Fertigungsverfahren ermöglicht eine sehr effiziente und kostengünstige Fertigung der Kapsel. Ausserdem können mittels Spritzguss komplexe Konturen und Strukturen kostengünstig und in gleichbleibender Präzision hergestellt werden.

Weitere Aspekte der Erfindung betreffen ein System umfassend eine solche Kapsel und eine Getränkezubereitungsmaschine.

Die besagte Getränkezubereitungsmaschine weist eine Halterung zur Aufnahme der Kapsel und mit Mittel zum Durchleiten einer Flüssigkeit durch die Kapsel auf, wobei wenigstens ein Penetrationselement zum Penetrieren des Deckels der Kapsel an der Halterung bzw. an der Brühkammer angeordnet ist.

Die Erfindung wird im Folgenden anhand von Abbildungen exemplarischer Ausführungsbeispiele näher erläutert.

Es zeigen schematisch:
- Figur 1: Einen Querschnitt durch eine nichterfindungsgemässe Kapsel;
- Figur 2: Einen Querschnitt durch ein alternatives Ausführungsbeispiel einer erfindungsgemässen Kapsel mit gleichem Kapselkörper wie gemäss Figur 1, jedoch mit anderem Strömungselement;
- Figur 3: Einen Querschnitt durch ein weiteres Ausführungsbeispiel einer erfindungsgemässen Kapsel mit gleichem Strömungselement wie gemäss Figur 2, jedoch mit einem Kapselkörper, bei dem im Bodenbereich kreisringförmige Elemente zum Ablenken der aus dem Durchlass austretenden Flüssigkeit angeordnet sind;
- Figur 4: Eine Teilvergrösserung des Bodenbereichs einer Kapsel gemäss Figur 3;
- Figur 5: Einen Querschnitt durch eine Kapsel gemäss Figur 2, mit einer Substanz zur Herstellung einer flüssigen Lebensmittels gefüllt;
- Figur 6: Einen Querschnitt durch ein alternatives Ausführungsbeispiel einer Kapsel gemäss Figur 2, jedoch mit einem zusätzlichem Filterelement zur Trennung der Substanz zur Zubereitung eines Getränkeproduktes vom Strömungselement;
- Figur 7: Einen Querschnitt durch ein alternatives Ausführungsbeispiel einer Kapsel;
- Figur 8: Eine Teilvergrösserung des Bodenbereichs der Kapsel gemäss Figur 7;
- Figur 9: Eine perspektivische Ansicht auf die Unterseite des Strömungselements aus Figur 7;
- Figur 10: Eine perspektivische Ansicht des Kapselkörpers aus Figur 7;
- Figur 11a: Eine weitere Teilvergrösserung des Bodenbereichs der Kapsel gemäss Figur 7 vor der Extraktion;
- Figur 11b: Die Teilvergrösserung aus Figur 11b während der Extraktion; und
- Figur 12: Eine alternative Ausführungsform in einer Teilvergrösserung ähnlich zu Figur 8.

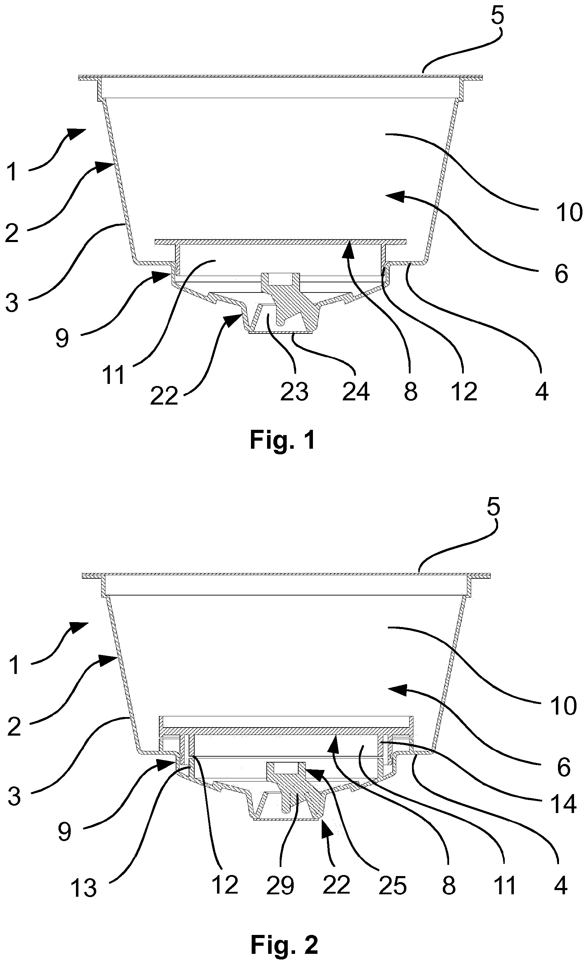

Figur 1 zeigt einen Querschnitt durch eine nicht erfindungsgemässe Kapsel 1 mit einem Strömungselement 8. Der Kapselkörper 2 umfasst eine Seitenwand 3 und einen Boden 4. Er wird durch einen Deckel 5 verschlossen, wobei im Inneren der Kapsel eine Kammer 6 gebildet wird. Das Strömungselement 8 ist über einen Haltebereich 9 mit dem Boden 4 der Kapsel 1 verbunden. Dadurch wird die Kammer 6 in einen deckelseitigen Teil 10 und einen bodenseitigen Teil 11 unterteilt. Ferner weist der Boden 4 einen Auslaufstutzen 22 mit einer Auslauföffnung 23 auf. Die Auslauföffnung 23 ist durch eine Folie oder eine Membran 24 verschlossen. In diesem Ausführungsbeispiel wird der Durchlass 12 durch den Formschluss im Haltebereich 9 zum Halten des Strömungselementes 8 im Kapselinnenraum gebildet. Das gezeigte Strömungselement 8 ist unter der Einwirkung von Druck und/oder Wärme deformierbar.

Figur 2 zeigt einen Querschnitt durch ein alternatives Ausführungsbeispiel einer Kapsel 1 mit gleichem Kapselkörper 2 wie in Figur 1, jedoch mit einem anderen Strömungselement 8. Das Strömungselement 8 ist über einen Haltebereich 9 formschlüssig mit dem Boden 4 der Kapsel verbunden. Am Boden 4 und am Strömungselement 8 sind gegeneinander gerichtete Stege 13 und 14 angebracht, welche den Durchlass 12 bilden. Die Stege 13 und 14 bilden hier einen Anschlag zum Verhindern eines axialen Verschiebens des Strömungselementes in Richtung des Bodens 4. Zudem ist das Prallelement 25 zu erkennen, welches über eine Rippe 29 mit dem Auslaufstutzen 22 verbunden ist. Die nicht sichtbaren Linien hinter der Rippe 29 sind in der besagten Darstellung gestrichelt eingezeichnet.

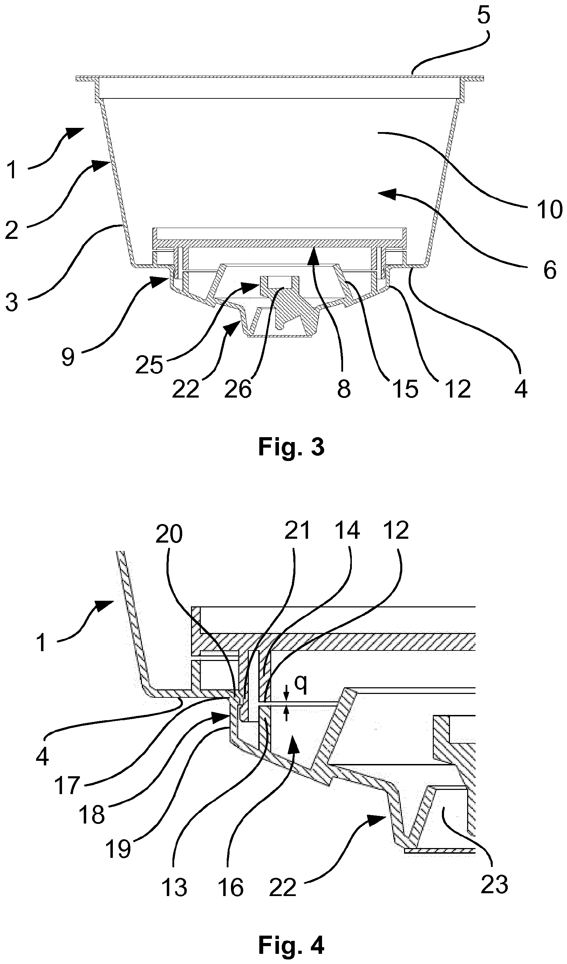

Figur 3 zeigt einen Querschnitt durch ein weiteres Ausführungsbeispiel einer erfindungsgemässen Kapsel 1. Gegenüber dem Durchlass 12 sind kreisringförmige Elemente 15 zum Ablenken der aus dem Durchlass austretenden Flüssigkeit am Boden 4 des Kapselkörpers 2 angeordnet. Eine weitere Verwirbelung der austretenden Flüssigkeit wird durch die Prallplatte 26 am Prallelement 25 erzielt.

Figur 4 zeigt den Bodenbereich einer Kapsel gemäss Figur 3 in Vergrösserung. Es ist zu erkennen, dass die Kapsel 1 im Boden 4 eine zylindrische Vertiefung 18 mit einer Seitenwand 19 und einer Aufnahmeschulter 17 aufweist. Diese zylindrische Vertiefung 18 bildet eine kreisförmige Aufnahme 16 für das Strömungselement 8. Das Strömungselement 8 wird dabei durch die Rastelemente 20 und 21 formschlüssig in der Vertiefung 18 gehalten. Die am Boden 4 und am Strömungselement 8 angebrachten gegeneinander gerichteten kreisringförmigen Stege 13 und 14 bilden den Durchlass 12 mit einer Breite q. Deutlicher ist hier ebenfalls der Auslaufstutzen 22 mit der Auslauföffnung 23 zu erkennen. Die Breite (q) des Durchlasses 12 ist unter Druckeinwirkung im deckelseitigen Teil 10 der Kammer 6 auf das Strömungselement 8 verkleinerbar.

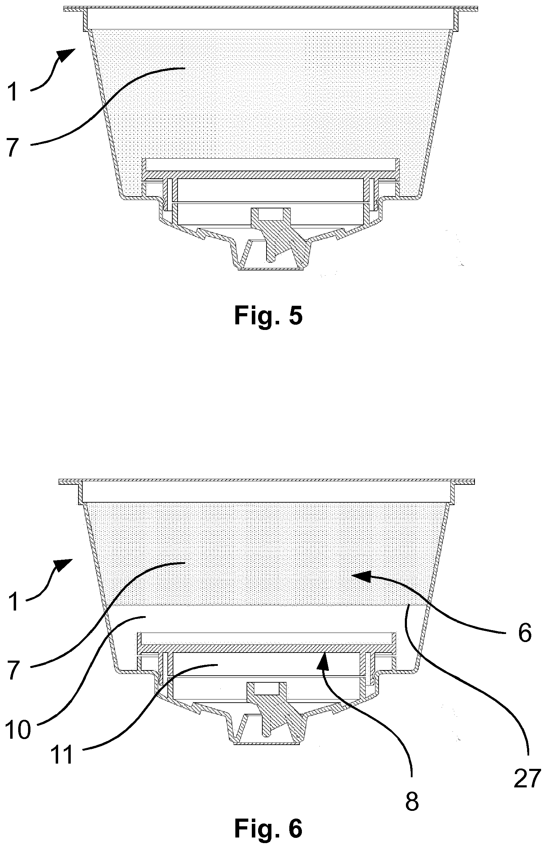

Figur 5 zeigt eine erfindungsgemässe Kapsel 1 gemäss Figur 2, die mit einer Substanz 7 zur Herstellung eines flüssigen Lebensmittels gefüllt ist.

Figur 6 zeigt eine erfindungsgemässe Kapsel 1, die mit einer Substanz 7 zur Herstellung eines flüssigen Lebensmittels gefüllt ist. Die Substanz 7 ist dabei durch ein Filterelement 27 im deckelseitigen Teil 10 der Kammer 6 vom Strömungselement 8 getrennt.

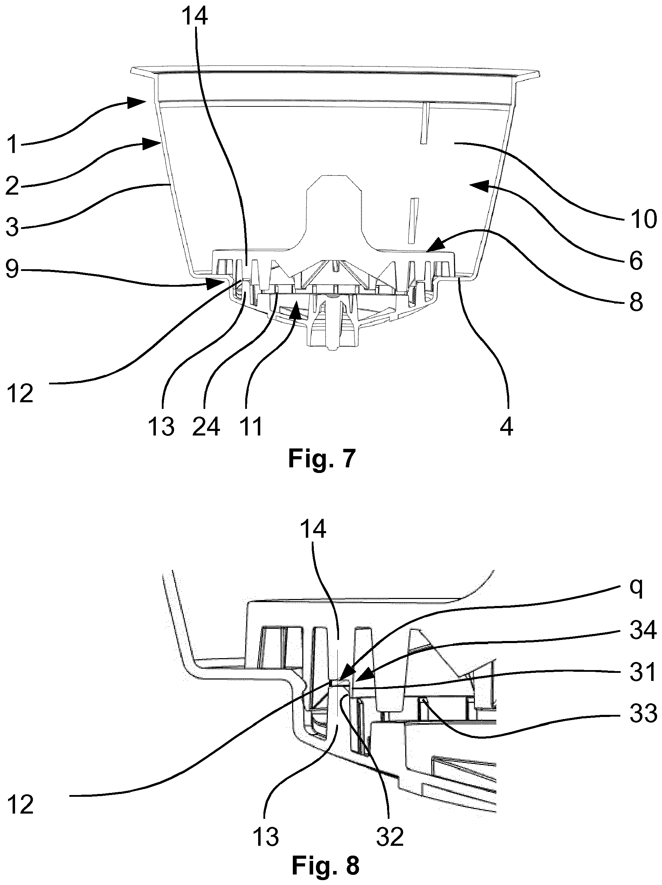

In Figur 7 ist ein Querschnitt durch ein alternatives Ausführungsbeispiel einer erfindungsgemässen Kapsel 1 dargestellt. Die Kapsel weist einen Kapselkörper 2 mit einer Seitenwand 3 und einem Boden 4 auf. Ein den Kapselkörper 2 üblicherweise verschliessender Deckel, welcher im Kapselkörper 2 eine geschlossene Kammer 6 bildet, ist nicht dargestellt. Im Kapselkörper 2 ist im Bereich des Bodens 4 ein Strömungselement 8 angeordnet, welches die Kammer 6 in einen deckelseitigen Teil 10 und einen bodenseitigen Teil 11 unterteilt. Üblicherweise ist eine Getränkesubstanz (nicht dargestellt), welche zur Zubereitung eines Getränkes dient, im deckelseiteigen Teil 10 der Kammer 6 angeordnet. Der Kapselkörper weist im Bereich des Bodens 4 einen als Schulter ausgebildeten Haltebereich 9 auf, welcher mit einem Rastelement, wie bereits in Figur 4 dargestellt, ausgestattet ist.

Das Strömungselement 8 ist im Wesentlichen scheibenförmig ausgestaltet und wird mit einem korrespondierenden Rastelement in das Rastelement des Kapselkörpers 2 im Haltebereich 9 eingeschnappt und festgehalten. Das Strömungselement weist weiter an seinem äusseren Rand eine zum Boden 4 des Kapselkörpers 2 gerichtete Kante auf, welche min Nuten 30 zum verbesserten Durchfluss versehen ist. Zwischen einem kreisförmigen Steg 13 am Boden des Kapselkörpers 2 und einem korrespondierenden kreisförmigen Steg 14 auf der Unterseite des Strömungselementes 8 ist ein Durchlass 12 ausgebildet. Dieser Durchlass sorgt beim Durchströmen mit einer Flüssigkeit für Scherkräfte und eine Verwirbelung der Flüssigkeit. Eine Folie oder Membran 24 zur Absperrung des Kapselinnenraums ist hier auf einem umlaufenden Vorsprung befestigt, der konzentrisch innerhalb des umlaufenden Stegs 13 verläuft.

In der Figur 8 ist eine Teilvergrösserung des Bodenbereichs der Kapsel aus Figur 7 dargestellt. Die Breite oder der Querschnitt q des Durchlasses 12 ist eingezeichnet. Weiter ist ersichtlich, dass am Steg 14 des Strömungselementes eine Dichtungslippe 31 angeordnet ist, welche mit einer Dichtungsfläche 32 des Steges 14 am Boden zusammenwirkt und ein Ventil 34 bildet. Zum Öffnen des Ventils 34 ist der eine Steg 13 zusätzlich mit einer Rampe 33 versehen, welche rippenförmig auf der Innenseite des Stegs 13 hervorsteht. Bei einer Verschiebung oder Deformation des Strömungselementes 8 gegen den Boden wird zwar der Querschnitt q des Durchlasses 12 verringert, gleichzeitig wird jedoch die Dichtungslippe 31 über die Rampe 33 geschoben, sodass sich das Ventil 34 zwangsweise öffnet.

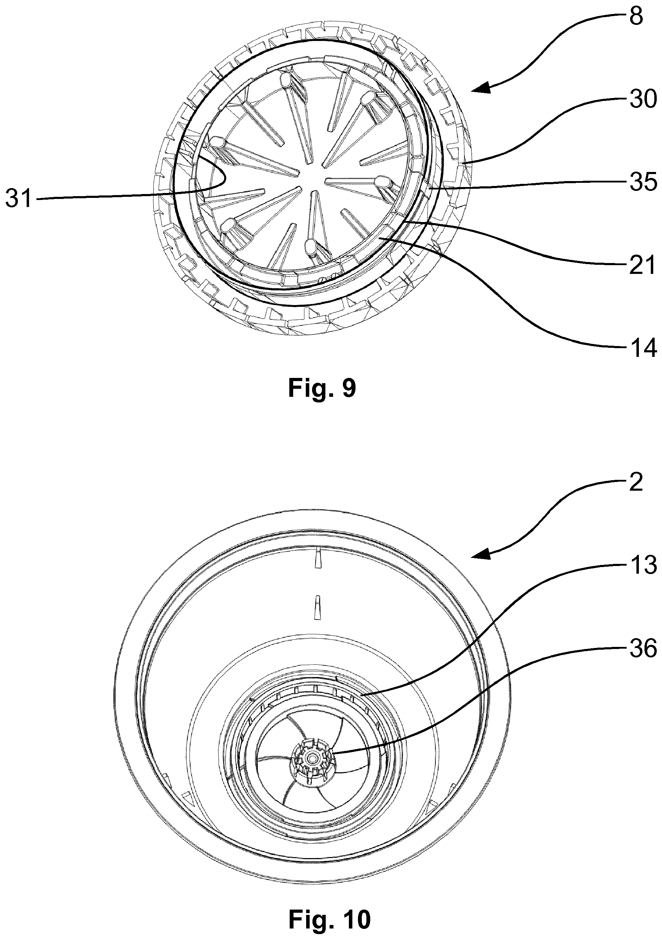

Die Figur 9 zeigt eine perspektivische Ansicht auf die Unterseite des Strömungselements 8 aus Figur 7. Deutlich zu erkennen sind die Nuten 30, welche am äusseren Rand des Strömungselementes 8 angeordnet sind und einer Flüssigkeit erlauben, in den bodenseitigen Teil 11 der Kammer 6 zu gelangen. Ausserdem sind Öffnungen 35 zu erkennen, welche das ringförmige Rastelement 21 des Strömungselementes 8 in einzelne Segmente unterteilen. Diese Öffnungen 35 begünstigen ein um- und/oder durchströmen des Haltebereichs 9 (siehe Figur 7), sodass die Flüssigkeit überhaupt zum Durchlass 12 (siehe Figur 7) gelangen kann. Wie bereits zu Figur 7 erwähnt, wird dieser Durchlass gebildet durch zwei sich gegenüberstehende kreisförmige Stege, wobei ein Steg 14 am Strömungselement 8 angeordnet ist und der andere Steg sich im Bereich des Bodens des Kapselkörpers befindet. Der Steg 14 weist keine ebene Oberfläche auf, sondern ist gestuft ausgestaltet. Durch diese gestufte Oberfläche kann sichergestellt werden, dass bei einer Verschiebung oder Deformation des Strömungselementes 8 gegen den Boden des Kapselkörpers der Durchlass 12 (siehe Figur 7) immer offen bleibt und nicht komplett verschlossen werden kann. Weiter zu erkennen ist die Dichtungslippe 31, welche mit den Dichtungsflächen des Steges des Kapselbodens das Ventil bilden und über die Rampen 33 (siehe Figur 8) abgehoben werden.

In der Figur 10 ist eine perspektivische Ansicht auf einen erfindungsgemässen Kapselkörper 2 dargestellt. Dabei ist die Innenseite des Kapselkörpers dargestellt, wobei kein Strömungselement eingesetzt ist. Im Bodenbereich des Kapselkörpers ist ein kreisförmig umlaufender Steg 13 ersichtlich, welcher wie vorgängig beschreiben mit dem Steg 14 (siehe beispielsweise Figur 9) eines Strömungselementes zusammenwirkt. Zentrisch bildet eine Struktur den Auslauf, wobei eine Schikane 36 die Auslauföffnung überlagert und so die Strömung behindert. Diese Schikane 36 weist eine ringförmige Struktur auf, welche jedoch in einzelne Teilsegmente unterteilt ist. Dabei sind die einzelnen Segmente so ausgerichtet, dass eine Flüssigkeit vor Austritt zu einer Richtungsänderung gezwungen wird.

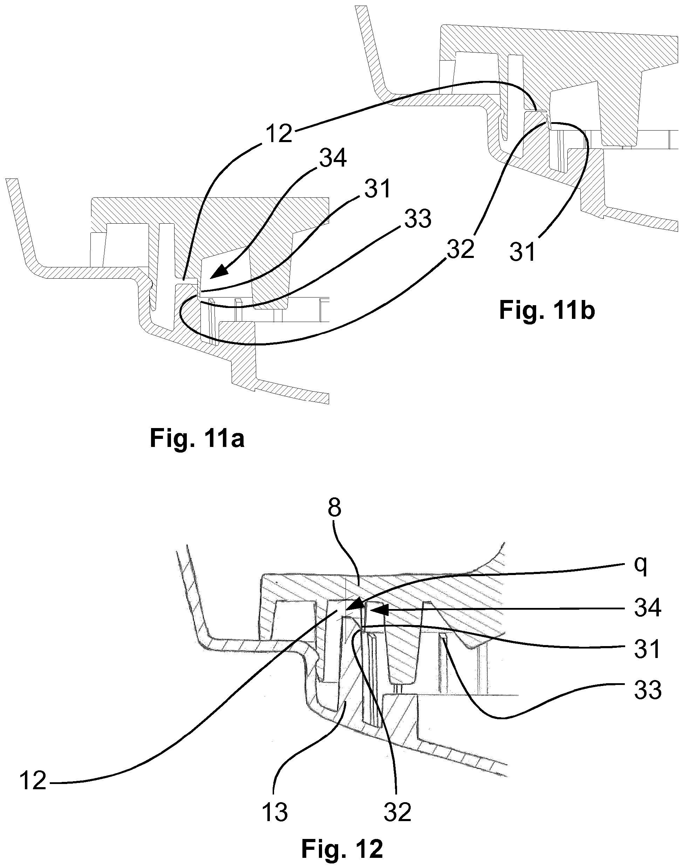

Die Figuren 11a und 11b zeigen eine weitere Teilvergrösserung des Bodenbereichs der Kapsel gemäss Figur 7 vor und während der Extraktion eines Getränkes. Dabei ist der Ausschnitt so gewählt, dass das Ventil 34 und der Durchlass 12 vergrössert betrachtet werden kann. Vor der Extraktion, also im drucklosen Zustand wie in Figur 11a dargestellt, ist der Durchlass 12 deutlich als Spalt zwischen den beiden kreisringförmigen Stegen 13, 14 (seine Figur 7) zu erkennen. Das Ventil 34 ist geschlossen, die Dichtungslippe 31 liegt an der Dichtungsfläche 32 an. In der dargestellten Figur 11a ist unterhalb der Dichtungslippe 31 eine Rampe 33 ausgebildet, welche rippenförmig aus dem bodenseitigen ringförmigen Steg hervorsteht. Wird nun der Extraktionsprozess gestartet und der Druck im Innern der Kapsel erhöht, so deformiert und/oder verschiebt sich das Strömungselement 8 in Richtung zum Boden 4 (siehe Figur 7), die beiden kreisringförmigen Stege werden aufeinander gedrückt und dienen als Anschlag zur Begrenzung der Deformation und/oder Verschiebung. Dieser Zustand ist in Figur 11b dargestellt. In der Darstellung scheint der Durchlass 12 verschlossen zu sein. Aufgrund der gestuften Ausformung des Steges 14 (siehe Figur 9) des Strömungselementes ist aber nach wie vor ein Durchlass vorhanden, sodass das extrahierte Getränk zum Ventil 34 gelangen kann. Durch die Deformation und/oder Verschiebung des Strömungselementes wird auch die Dichtungslippe 31 des Ventils 34 gegen den Boden verschoben, sodass sich die Dichtungslippe 31 über die Rampe 33 bewegt und entsprechend von der Dichtungsfläche 32 abgehoben wird. Entsprechend ist das Ventil 34 offen und das Getränk kann durch den Durchlass 12 und das Ventil 34 zum Auslauf des Kapselkörpers gelangen.

Die Figur 12 offenbart eine alternative Ausführungsform des Bodenbereichs in einer Teilvergrösserung ähnlich zu Figur 8. Im Gegensatz zur Figur 8 ist jedoch der bodenseitige kreisringförmige Steg 13 grösser ausgestaltet. Der Durchlass 12 wird zwischen einer Fläche auf der Unterseite des Strömungselementes 8 und dem Steg 13 gebildet. Wiederum ist der Querschnitt q des Durchlasses 12 dargestellt. Das Ventil 34 ist in Analogie zum Ventil in Figur 8 ausgebildet. Die Dichtungslippe 31 ist jedoch direkt an der Unterseite des Strömungselementes 8 ausgeformt und wirkt wiederum mit einer Dichtfläche 32 des Steges 13 zusammen. Um das Ventil 34 zu öffnen ist wiederum eine Deformation und/oder eine Verschiebung des Strömungselementes 8 in Richtung zum Boden des Kapselkörpers nötig. Die Dichtlippe 31 gleitet dabei wiederum über eine Rampe 33 und wird so von der Dichtfläche abgehoben.

Figur 12 Eine alternative Ausführungsform in einer Teilvergrösserung ähnlich zu Figur 8.

## Patentansprüche

1. Kapsel (1) umfassend einen vorzugsweise rotationssymmetrisch ausgebildeten Kapselkörper (2) mit mindestens einer Seitenwand (3) und einem Boden (4), sowie einen den Kapselkörper (2) abdeckenden Deckel (5) zur Bildung von wenigstens einer Kammer (6), welche mindestens eine Substanz (7) zur Zubereitung eines flüssigen Lebensmittels enthält, wobei zur Durchleitung einer Flüssigkeit durch die Kammer (6) der Deckel (5) eine Eintrittsseite und der Boden (4) eine Austrittsseite bilden, wobei über dem Boden (4) ein separates Strömungselement (8) über einen Haltebereich (9) in der Kapsel (1) gehalten ist, wobei das Strömungselement (8) die Kammer (6) in einen deckelseitigen Teil (10) und in einen bodenseitigen Teil (11) unterteilt, wobei ein Durchlass (12) für die Flüssigkeit durch gegenüberliegende Abschnitte des Bodens (4) und des Strömungselementes (8) begrenzt ist, wobei der Haltebereich (9) von der Flüssigkeit um- und/oder durchströmbar ist, **dadurch gekennzeichnet, dass** der Durchlass (12) gebildet ist durch
- wenigstens zwei je gegeneinander gerichtete, vorzugsweise kreisringförmige, Stege (13, 14), wobei ein Steg (13) Teil des Bodens (4) und ein Steg (14) Teil des Strömungselementes (8) ist, oder
- eine Fläche des Strömungselements (8) und durch einen vorzugsweise kreisförmigen Steg (13) am Boden (4).

2. Kapsel (1) nach Anspruch 1, **dadurch gekennzeichnet, dass** das Strömungselement (8) unter Einwirkung von Druck und/oder Wärme deformierbar und/oder verschiebbar ist.

3. Kapsel (1) nach Anspruch 2, **dadurch gekennzeichnet, dass** der Steg oder die Stege (13, 14) einen Anschlag zum Verhindern oder Begrenzen eines axialen Verschiebens und/oder eines Deformierens des Strömungselementes (8) in Richtung des Bodens (4) bildet bzw. bilden.

4. Kapsel (1) nach Anspruch 2 oder 3, **dadurch gekennzeichnet, dass** unter Druckeinwirkung im deckelseitigen Teil (10) der Kammer (6) auf das Strömungselement (8) eine Breite (q) des Durchlasses (12) verkleinerbar ist.

5. Kapsel (1) nach einem der vorhergehenden Ansprüche, **dadurch gekennzeichnet, dass** im Bereich des Durchlasses (12) ein Ventil (34) zum Öffnen und Verschliessen des Durchlasses (12) angeordnet ist.

6. Kapsel (1) nach Anspruch 5, **dadurch gekennzeichnet, dass** das Ventil (34) unter Druckeinwirkung, insbesondere durch eine durch die Druckeinwirkung bedingte Verschiebung und/oder Deformation des Strömungselementes (8), öffnenbar ist.

7. Kapsel (1) nach Anspruch 5 oder 6, **dadurch gekennzeichnet, dass** das Ventil (34) eine Dichtlippe (31) aufweist, wobei die Dichtlippe (31) insbesondere bei einer Verschiebung des Strömungselementes (8) gegen den Boden (4) mit wenigstens einer Rampe (33) zusammenwirkt und von einer korrespondierenden Dichtfläche (32) abhebbar ist.

8. Kapsel (1) nach Anspruch 7, **dadurch gekennzeichnet, dass** die Dichtlippe (31) oder die Dichtfläche (32) am Steg (13) am Boden (4) angeordnet ist.

9. Kapsel (1) nach einem der vorhergehenden Ansprüche, **dadurch gekennzeichnet, dass** der Boden (4) im Haltebereich (9) eine vorzugsweise kreisförmige Aufnahme (16), insbesondere eine Aufnahmeschulter (17) aufweist, an der das Strömungselement (8) lagestabil gehalten, insbesondere eingerastet ist.

10. Kapsel (1) nach Anspruch 9, **dadurch gekennzeichnet, dass** an der Aufnahme (16) und am Strömungselement (8) korrespondierende Rastelemente (20, 21) angeordnet sind.

11. Kapsel (1) nach Anspruch 9 oder 10, **dadurch gekennzeichnet, dass** der Haltebereich (9) Öffnungen (35) aufweist, um ein Durchströmen des Haltebereichs (9) zu ermöglichen und/oder zu begünstigen.

12. Kapsel (1) nach einem der vorhergehenden Ansprüche, **dadurch gekennzeichnet, dass** der Boden (4) einen Auslaufstutzen (22) mit einer Auslauföffnung (23) aufweist.

13. Kapsel (1) nach Anspruch 12, **dadurch gekennzeichnet, dass** im Boden (4) in Fliessrichtung vor dem Auslaufstutzen (22) eine Schikane (36) angeordnet ist, welche ein Mäandern der Flüssigkeit vom Durchlass (12) zum Auslaufstutzen (22) erzwingt.

14. Kapsel (1) nach Anspruch 12 oder 13, **dadurch gekennzeichnet, dass** zwischen dem Durchlass (12) und der Auslauföffnung (23) eine insbesondere unter Druck zerreissbare oder penetrierbare Folie oder Membran (24) angeordnet ist.

15. System umfassend eine Kapsel (1) nach einem der Ansprüche 1 bis 14 und eine Getränkezubereitungsmaschine mit einer Halterung zur Aufnahme der Kapsel (1) und mit Mitteln zum Durchleiten einer Flüssigkeit durch die Kapsel (1), wobei wenigstens ein Penetrationselement zum Penetrieren des Deckels (5) der Kapsel (1) an der Halterung angeordnet ist.

## Claims

1. Capsule (1) comprising a preferably rotationally symmetrical capsule body (2) with at least one side wall (3) and a base (4), and a cover (5) which covers the capsule body (2) to form at least one chamber (6), which contains at least one substance (7) for preparing a liquid food, the cover (5) forming an inlet side and the base (4) forming an outlet side to guide a liquid through the chamber (6), a separate flow element (8) being held over the base in the capsule (1) via a holding region (9), the flow element (8) subdividing the chamber (6) into a cover-side part (10) and a base-side part (11), a passage (12) for the liquid being delimited by opposite sections of the base (4) and the flow element (8), it being possible for the liquid to flow around and/or through the holding region (9), **characterized in that** the passage (12) is formed by
- at least two preferably annular webs (13, 14) that are directed towards each other, one web (13) being part of the base (4) and one web (14) being part of the flow element (8), or
- a surface of the flow element (8) and by a preferably annular web (13) on the base (4).

2. Capsule (1) according to Claim 1, **characterized in that** the flow element (8) is deformable and/or displaceable under the action of pressure and/or heat.

3. Capsule (1) according to Claim 2, **characterized in that** the web or the webs (13, 14) forms or form a stop to prevent or delimit axial displacement and/or deformation of the flow element (8) in the direction of the base (4).

4. Capsule (1) according to Claim 2 or 3, **characterized in that** a width (q) of the passage (12) can be reduced under the action of pressure in the cover-side part (10) of the chamber (6) on the flow element (8)

5. Capsule (1) according to one of the preceding claims, **characterized in that** a valve (34) for opening and closing the passage (12) is arranged in the region of the passage (12).

6. Capsule (1) according to Claim 5, **characterized in that** the valve (34) can be opened under the action of pressure, in particular by a displacement and/or deformation of the flow element (8) caused by the action of pressure.

7. Capsule (1) according to Claim 5 or 6, **characterized in that** the valve (34) has a sealing lip (31), wherein the sealing lip (31) interacts with at least one ramp (33), in particular during a displacement of the flow element (8) towards the base (4), and can be lifted off a corresponding sealing surface (32).

8. Capsule (1) according to Claim 7, **characterized in that** the sealing lip (31) or the sealing surface (32) is arranged on the web (13) on the base (4).

9. Capsule (1) according to one of the preceding claims, **characterized in that** the base (4) in the holding region (9) has a preferably circular receptacle (16), in particular a receiving shoulder (17), on which the flow element (8) is held in a positionally stable manner, in particular latched in.

10. Capsule (1) according to Claim 9, **characterized in that** corresponding latching elements (20, 21) are arranged on the receptacle (16) and on the flow element (8).

11. Capsule (1) according to Claim 9 or 10, **characterized in that** the holding region (9) has openings (35) in order to permit and/or to promote flow through the holding region (9).

12. Capsule (1) according to one of the preceding claims, **characterized in that** the base (4) has an outlet connector (22) with an outlet opening (23).

13. Capsule (1) according to Claim 12, **characterized in that** in the base (4), before the outlet connector (22) in the direction of flow, there is arranged a chicane (36), which forces the liquid to meander from the passage (12) to the outlet connector (22).

14. Capsule (1) according to Claim 12 or 13, **characterized in that** a film or membrane (24) that can be torn or penetrated, in particular under pressure, is arranged between the passage (12) and the outlet opening (23).

15. System comprising a capsule (1) according to one of Claims 1 to 14 and a beverage preparation machine with a holder to hold the capsule (1) and with means for leading a liquid through the capsule (1), wherein at least one penetration element for penetrating the cover (5) of the capsule (1) is arranged on the holder.

## Revendications

1. Capsule (1) comprenant un corps de capsule (2) réalisé de préférence avec une symétrie de révolution, comprenant au moins une paroi latérale (3) et un fond (4), ainsi qu'un couvercle (5) recouvrant le corps de capsule (2) pour former au moins une chambre (6) qui contient au moins une substance (7) pour la préparation d'un aliment liquide, pour le passage d'un liquide à travers la chambre (6), le couvercle (5) formant un côté d'entrée et le fond (4) formant un côté de sortie, un élément d'écoulement séparé (8) étant retenu dans la capsule (1) par le biais d'une région de retenue (9) au-dessus du fond (4), l'élément d'écoulement (8) divisant la chambre (6) en une partie côté couvercle (10) et en une partie côté fond (11), un passage (12) pour le liquide étant limité par des parties opposées du fond (4) et de l'élément d'écoulement (8), la région de retenue (9) pouvant être parcourue et/ou entourée par le liquide, **caractérisée en ce que** le passage (12) est formé par
- au moins deux nervures (13, 14) orientées à l'opposé l'une de l'autre, de préférence de forme annulaire circulaire, une nervure (13) faisant partie du fond (4) et une nervure (14) faisant partie de l'élément d'écoulement (8), ou
- une surface de l'élément d'écoulement (8) et par une nervure (13) au niveau du fond (4), de préférence circulaire.

2. Capsule (1) selon la revendication 1, **caractérisée en ce que** l'élément d'écoulement (8) peut être déformé et/ou déplacé sous l'application de pression et/ou de chaleur.

3. Capsule (1) selon la revendication 2, **caractérisée en ce que** la nervure ou les nervures (13, 14) forme ou forment une butée pour empêcher ou limiter un déplacement axial et/ou une déformation de l'élément d'écoulement (8) dans la direction du fond (4).

4. Capsule (1) selon la revendication 2 ou 3, **caractérisée en ce que**, par application de pression dans la partie côté couvercle (10) de la chambre (6) sur l'élément d'écoulement (8), une largeur (q) du passage (12) peut être réduite.

5. Capsule (1) selon l'une quelconque des revendications précédentes, **caractérisée en ce que** dans la région du passage (12) est disposée une valve (34) pour ouvrir et fermer le passage (12).

6. Capsule (1) selon la revendication 5, **caractérisée en ce que** la valve (34) peut être ouverte par application de pression, en particulier par un déplacement et/ou une déformation de l'élément d'écoulement (8) provoqués par l'application de pression.

7. Capsule (1) selon la revendication 5 ou 6, **caractérisée en ce que** la valve (34) présente une lèvre d'étanchéité (31), la lèvre d'étanchéité (31) coopérant avec au moins une rampe (33) notamment dans le cas d'un déplacement de l'élément d'écoulement (8) vers le fond (4), et pouvant être soulevée d'une surface d'étanchéité correspondante (32).

8. Capsule (1) selon la revendication 7, **caractérisée en ce que** la lèvre d'étanchéité (31) ou la surface d'étanchéité (32) est disposée au niveau de la nervure (13) sur le fond (4).

9. Capsule (1) selon l'une quelconque des revendications précédentes, **caractérisée en ce que** le fond (4) présente, dans la région de retenue (9), un logement (16) de préférence circulaire, en particulier un épaulement de réception (17) au niveau duquel l'élément d'écoulement (8) est retenu de manière stable en position, en particulier par encliquetage.

10. Capsule (1) selon la revendication 9, **caractérisée en ce qu'**au niveau du logement (16) et au niveau de l'élément d'écoulement (8) sont disposés des éléments d'encliquetage correspondants (20, 21).

11. Capsule (1) selon la revendication 9 ou 10, **caractérisée en ce que** la région de retenue (9) présente des ouvertures (35) afin de permettre et/ou favoriser un écoulement à travers la région de retenue (9).

12. Capsule (1) selon l'une quelconque des revendications précédentes, **caractérisée en ce que** le fond (4) présente une tubulure de sortie (22) avec une ouverture de sortie (23).

13. Capsule (1) selon la revendication 12, **caractérisée en ce qu'**une chicane (36) est disposée dans le fond (4) dans la direction d'écoulement avant la tubulure de sortie (22), laquelle chicane provoque un déplacement en méandres du liquide du passage (12) jusqu'à la tubulure de sortie (22).

14. Capsule (1) selon la revendication 12 ou 13, **caractérisée en ce qu'**entre le passage (12) et l'ouverture de sortie (23) est disposée une feuille ou une membrane (24) pouvant être déchirée ou traversée notamment par application de pression.

15. Système comprenant une capsule (1) selon l'une quelconque des revendications 1 à 14 et une machine de préparation de boissons comprenant une fixation pour recevoir la capsule (1) et comprenant des moyens pour le passage d'un liquide à travers la capsule (1), au moins un élément de pénétration étant prévu au niveau de la fixation pour pénétrer à travers le couvercle (5) de la capsule (1).
